# EUROPÄISCHE PATENTSCHRIFT

(11) **EP 1 110 906 B1**
(45) Veröffentlichungstag und Bekanntmachung des Hinweises auf die Patenterteilung: **14.12.2005**
(21) Anmeldenummer: 00122569.7
(22) Anmeldetag: 17.10.2000
(51) Int. Cl.: C01B 3/58, B01J 12/00, B01J 8/00, B01J 19/24, H01M 8/06

(54) **Vorrichtung zur selektiven katalytischen Oxidation von Kohlenmonoxid**
Apparatus for the selective oxidation of carbon monoxide
Dispositif pour l'oxydation catalytique sélective de monoxyde de carbone

(30) Priorität: 23.12.1999 DE 19962555
(43) Veröffentlichungstag der Anmeldung: 27.06.2001
(73) Patentinhaber: NuCellSys GmbH, 73230 Kirchheim/Teck-Nabern (DE)
(72) Erfinder: Hassert, Alexandra, 73117 Wangen (DE); Lippert, Marco, 89346 Bibertal-Bühl (DE); Schüssler, Martin, Dr., 89073 Ulm (DE); Wolfsteiner, Matthias, 73230 Kirchheim (DE)
(74) Vertreter: Finkele, Rolf

(56) Entgegenhaltungen:
- EP-A- 0 941 963
- EP-A- 0 976 679
- DE-A- 19 539 648
- US-A- 5 330 727

## Beschreibung

Die Erfindung betrifft eine Vorrichtung zur selektiven katalytischen Oxidation von Kohlenmonoxid gemäß dem Oberbegriff des unabhängigen Anspruchs.

Aus der DE 195 44 895 C1 ist eine Vorrichtung bekannt, bei der eine variable und auf die jeweilige Situation abstimmbare Prozeßführung möglich ist. Dabei wird ein kohlenmonoxidhaltiges Gas und ein zusätzliches oxidierendes Gas durch einen ein Katalysatormaterial enthaltenden Reaktor hindurchgeleitet. Es wird vorgeschlagen, das oxidierende Gas an mehreren Stellen längs des Gasgemischströmungswegs mit einer jeweils gesteuerten oder geregelten Durchflußmenge einzuleiten. Außerdem wird vorgeschlagen, den Gasgemischstrom durch im Eingangsbereich des CO-Oxidationsreaktors angeordnete statische Mischerstrukturen passiv zu kühlen.

Bei Brennstoffzellensystemen, welche in Fahrzeugen eingesetzt werden, ist eine hohe Dynamik des Systems erwünscht. Bei der erforderlichen Lastspreizung kommt es bei Teillast zu einer Rückbildung von Kohlenmonoxid in den CO-Oxidationsreaktoren durch eine sogen. Reverse-Shift-Reaktion. Dem kann zwar durch mehrstufige CO-Oxidationseinheiten entgegengewirkt werden, jedoch werden dadurch Masse, Volumen und Kosten der Vorrichtung ungünstig beeinflußt.

Aus der EP 0 941 963 A1 ist eine Vorrichtung nach dem Oberbegriff des Anspruchs 1 bekannt. Bei dieser Vorrichtung ist eine Einheit zur selektiven katalytischen Oxidation vorgesehen, welche mit Perlen aus selektivem Oxidations-Katalysatormaterial in Form von Schüttgut gefüllt ist.

Eine ähnliche Vorrichtung ist aus der US-5,874,051 bekannt.

Als weiterer Stand der Technik wird auf die DE 195 39 648 A1und die US-5,330,727 verwiesen.

Der Erfindung liegt die Aufgabe zugrunde, eine Vorrichtung zu schaffen, mit der eine selektive Oxidation von Kohlenmonoxid einfach, platzsparend und mit hoher Dynamik durchzuführen ist.

Diese Aufgabe wird bei einer Vorrichtung zur selektiven katalytischen Oxidation von in einem wasserstoffhaltigen Gasgemischstrom enthaltenen Kohlenmonoxid gelöst, mit zumindest einer Katalysatormaterial enthaltenden CO-Oxidationsstufe und mit zumindest einer Einlassöffnung zur Zufuhr von oxidierendem Gas zum Gasgemischstrom, wobei Mittel zur betriebsparameterabhängigen Dosierung des jeweils zugeführten oxidierenden Gases vorgesehen sind, wobei weiter in der CO-Oxidationsstufe zumindest ein katalysatorhaltiger durchströmbarer Körper im Gasgemischstrom angeordnet ist, welcher einen durch Wände begrenzten durchströmbaren Querschnitt des Gasgemischstroms in der CO-Oxidationsstufe ausfüllt und wobei Mittel zur lastabhängigen Temperaturvorgabe des Körpers vorgesehen sind. Bei dem erfindungsgemäßen Verfahren ist zur Lösung der Aufgabe ferner vorgesehen, dass der durchströmbare Körper von den Wänden der CO-Oxidationsstufe thermisch entkoppelt ist.

Durch die erfindungsgemäße Vorrichtung kann die Temperatur des katalytisch aktiven Bereichs lastabhängig variiert werden. Die Temperatur kann abgesenkt werden, indem weniger Sauerstoff dem Gasgemischstrom zudosiert wird, und die Temperatur kann erhöht werden, indem mehr Sauerstoff zudosiert wird. Je höher die gewünschte Dynamik der CO-Oxidationsstufe ist, desto geringer sollte die thermische Masse des katalytisch aktiven Bereichs gewählt werden. Die Temperaturveränderung kann dadurch ausreichend schnell erfolgen.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:
- Fig.1: einen Ausschnitt aus einem bevorzugten Brennstoffzellensystem und
- Fig.2: eine bevorzugte CO-Oxidationsstufe.

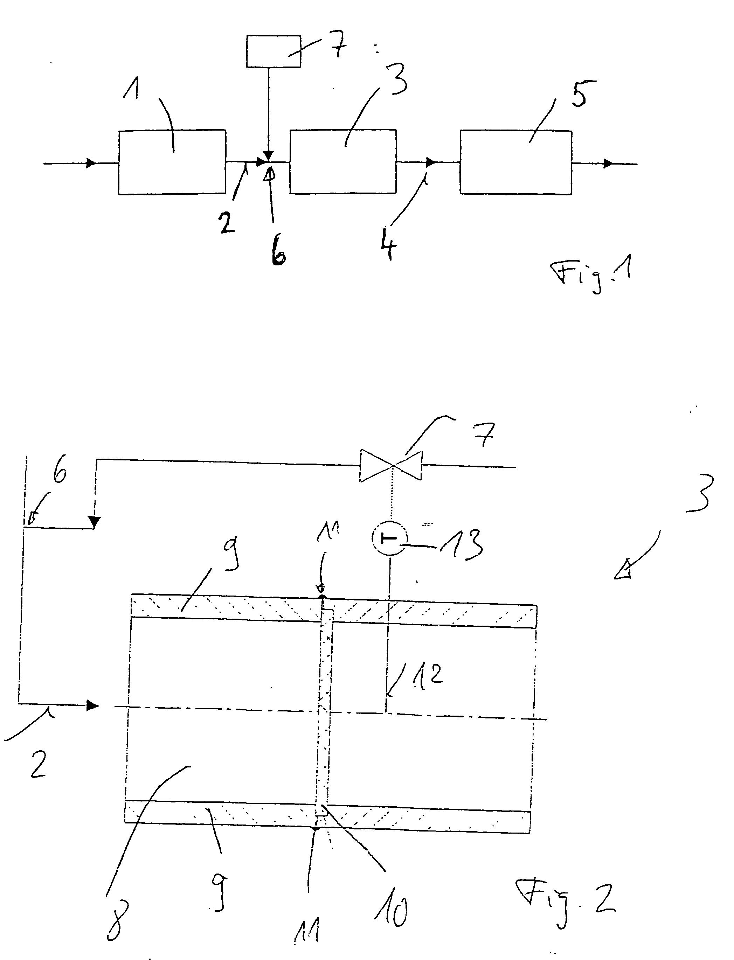

In Fig. 1 ist eine erfindungsgemäße Vorrichtung am Beispiel eines Ausschnitts aus einem Brennstoffzellensystems dargestellt. Weitere Details des Brennstoffzellensystems sind nicht gezeigt.

Aus einem Reformer 1 gelangt ein Gasgemischstrom über eine Strömungsleitung 2 in eine CO-Oxidationsstufe 3. Im Gasgemischstrom ist Kohlenmonoxid CO und Wasserstoff enthalten. Der Gasgemischstrom wird in der CO-Oxidationsstufe 3 von CO gereinigt; der gereinigte Gasgemischstrom wird dann über eine Strömungsleitung 4 einer Brennstoffzelle 5 zugeführt. Dem Gasgemischstrom wird zustromseits der CO-Oxidationsstufe 3 oder in der CO-Oxidationsstufe 3 über eine Einlaßöffnung 6 ein oxidierendes Medium, vorzugsweise Luft, über eine Zudosiereinrichtung 7 zudosiert. Es können auch mehrere CO-Oxidationsstufen im System vorgesehen sein.

In Fig. 2 ist eine bevorzugte Ausbildung einer CO-Oxidationsstufe 3 dargestellt. Die CO-Oxidationsstufe 3 ist als Rohr ausgebildet, kann jedoch auch eine Plattenreaktoranordnung oder eine andere Reaktorform sein. Der durchströmte Raum 8 wird von Wänden 9 begrenzt. Der Gasgemischstrom strömt aus dem Reformer über die Leitung 2 in die CO-Oxidationsstufe 3. Dabei wird an der Einlaßöffnung 6 ein oxidierendes Medium zugemischt, vorzugsweise Luft. Der Gasgemischstrom strömt durch einen Körper 10, der den Querschnitt des Strömungswegs des Gasgemischstroms in der CO-Oxidationsstufe 3 ausfüllt. Der durchströmbare Körper 10 weist eine katalytische Aktivität auf und setzt das Kohlenmonoxid im vorzugsweise wasserstoffhaltigen Gasgemischstrom selektiv und katalytisch um.

Der durchströmbare Körper ist durch eine sehr geringe thermische Masse bzw. geringe Wärmekapazität gekennzeichnet, so daß er auf Temperaturänderungen sehr schnell reagieren kann.

Der Masse des Katalysatorträgers ist vorzugsweise so zu wählen, daß innerhalb der vom System geforderten Dynamik eine vorgegebene Temperaturveränderung durch eine entsprechende Zudosierung eines oxidierenden Gases zu erreichen ist. Die Temperaturveränderung erfolgt so, daß durch eine erhöhte Zudosierung eine exotherme Reaktion abläuft und die Temperatur steigt, durch eine verringerte Zudosierung die exotherme Reaktion unterbleibt und die Temperatur fällt.

Bei einem Katalysatorträger, vorzugsweise einem katalysatorhaltigen metallischen Vlies, ergibt sich günstigerweise für einen Reformatstrom von ca. 100 Norm m³/h eine maximale Masse des Metalls, z.B. Stahl, von 10-200 g. Mit dieser geringen thermische Masse des Katalysatorträgers kann eine ausreichende Dynamik erzielt werden. Die Katalysatormasse selbst ist gering und kann vernachlässigt werden. Der geringen thermischen Masse entspricht eine geringe Wärmekapazität im Bereich von 5-100 Joule/Kelvin.

Die optimale Auslegung des durchströmbaren Körpers 10 ist dabei auf den jeweiligen Einsatzort der CO-Oxidationsstufe abzustimmen, da die thermische Belastung in verschiedenen Stufen unterschiedlich sein kann.

Zusätzlich ist der durchströmbare Körper 10 durch eine thermische Isolierung 11 von den Wänden 9 der CO-Oxidationsstufe 3 entkoppelt. Dazu geeignete Maßnahmen sind dem Fachmann geläufig.

Bei der katalytischen selektiven Reaktion entsteht Wärme, so daß die Temperatur des Gasgemischstroms hinter dem durchströmbaren Körper 10 ein Maß für die Umsetzung des Kohlenmonoxids ist. Durch einen Temperatursensor 12 stromab des Körpers 10 kann die Temperatur bestimmt werden, und eine Ansteuerung 13 wirkt auf die Dosiereinrichtung 7 so ein, daß das in den Gasgemischstrom oxidierende Medium lastabhängig zudosiert wird. Die Temperatur des katalytisch aktiven Bereichs bzw. des durchströmbaren Körpers 10 kann damit lastabhängig variiert, vorzugsweise vorgegeben werden. Die Temperaturveränderung erfolgt über eine Veränderung des Sauerstoffanteils im zugeführten Edukt. Dies kann durch eine Steuerung oder eine Regelung erfolgen. Die Vorgabe der Sauerstoffmenge ist eine Funktion der Last, die der Reaktor bzw. der durchströmbare Körper 10 bewältigen muß. Eine Steuerung der zuzugebenden Sauerstoffmenge kann mittels des Sensors 12 erfolgen. Die bei einer bestimmten Last zuzuführende Sauerstoffmenge kann auch ohne Sensor geregelt werden.

Der durchströmbare Körper 10 kann ein Katalysator beschichtetes Netz aufweisen. Alternativ wird er aus mit Katalysatormaterial beschichteten Geweben gebildet, wie etwa Vlies, Geflecht, Stoff, oder auch eine Katalysatorschüttung mit geringer thermischer Masse. Die Temperatur des katalytisch aktiven Bereichs kann daher sehr schnell variiert werden.

Je höher die geforderte Dynamik des Systems ist, desto geringer sollte die thermische Masse des aktiven Bereichs sein, damit die Temperaturveränderung ausreichend schnell erfolgen kann.

Ein Vorteil der erfindungsgemäßen Vorrichtung ist, daß Volumen und Masse der CO-Oxidationsstufe 3 praktisch nicht vergrößert wird. Dies ist besonders bei der Verwendung in einem Brennstoffzellensystem vorteilhaft, welches für mobile Anwendungen vorgesehen ist.

## Patentansprüche

1. Vorrichtung zur selektiven katalytischen Oxidation von in einem wasserstoffhaltigen Gasgemischstrom enthaltenem Kohlenmonoxid mit zumindest einer Katalysatormaterial enthaltenden CO-Oxidationsstufe (3) und mit zumindest einer Einlassöffnung (6) zur Zufuhr von oxidierendem Gas zum Gasgemischstrom, wobei Mittel (7) zur betriebsparameterabhängigen Dosierung des jeweils zugeführten oxidierenden Gases vorgesehen sind, wobei weiter in der CO-Oxidationsstufe (3) zumindest ein katalysatorhaltiger durchströmbarer Körper (10) im Gasgemischstrom angeordnet ist, welcher einen durch Wände (9) begrenzten durchströmbaren Querschnitt des Gasgemischstroms in der CO-Oxidationsstufe (3) ausfüllt, und wobei Mittel (12, 13) zur lastabhängigen Temperaturvorgabe des Körpers (10) vorgesehen sind,
**dadurch gekennzeichnet, dass** der durchströmbare Körper (10) von den Wänden (9) der CO-Oxidationsstufe (3) thermisch entkoppelt ist.

2. Vorrichtung nach Anspruch 1,
**dadurch gekennzeichnet, dass** der durchströmbare Körper (10) eine geringe thermische Masse hat.

3. Vorrichtung nach Anspruch 1,
**dadurch gekennzeichnet, dass** der durchströmbare Körper (10) ein katalysatorbeschichtetes Vlies aufweist.

4. Vorrichtung nach Anspruch 1,
**dadurch gekennzeichnet, dass** der durchströmbare Körper (10) ein katalysatorbeschichtetes Netz aufweist.

5. Vorrichtung nach Anspruch 1,
**dadurch gekennzeichnet, dass** der durchströmbare Körper (10) eine Katalysatorschüttung aufweist.

6. Vorrichtung nach Anspruch 1,
**dadurch gekennzeichnet, dass** ein Temperatursensor (12) im Gasgemischstrom stromab des durchströmbaren Körpers (10) angeordnet ist.

7. Verwendung der Vorrichtung nach Anspruch 1 in einem Brennstoffzellensystem.

## Claims

1. Device for the selective catalytic oxidation of carbon monoxide contained in a hydrogenous gas mixture flow with at least one CO oxidation stage (3) containing catalyst material and with at least one inlet opening (6) for feeding oxidizing gas to the gas mixture flow, means (7) being provided for metering the respective oxidizing gas fed in as a function of operating parameters,
in which furthermore
in the CO oxidation stage (3) at least one through-flow body (10) containing a catalyst is arranged in the gas mixture flow, which body fills a through-flow cross section of the gas mixture flow in the CO oxidation stage (3), which through-flow cross section is bounded by walls (9) and in which means (12, 13) are provided for pre-setting the temperature of the body (10) as a function of the load,
**characterized in that**
the through-flow body (10) is thermally insulated from the walls (9) of the CO oxidation stage (3).

2. Device according to Claim 1
**characterized in that**
the through-flow body (10) has a low thermal mass.

3. Device according to Claim 1
**characterized in that**
the through-flow body (10) has a catalyst-coated fleece.

4. Device according to Claim 1
**characterized in that**
the through-flow body (10) has a catalyst-coated mesh.

5. Device according to Claim 1
**characterized in that**
the through-flow body (10) has a catalyst packing.

6. Device according to Claim 1
**characterized in that**
a temperature sensor (12) is arranged in the gas mixture flow on the outlet flow side of the through-flow body (10).

7. Use of the device according to Claim 1 in a fuel cell system.

## Revendications

1. Dispositif pour l'oxydation catalytique sélective de monoxyde de carbone contenu dans un courant de mélange de gaz contenant de l'hydrogène, avec au moins un étage d'oxydation de CO (3) contenant un matériau catalyseur et avec au moins une ouverture d'entrée (6) pour l'amenée de gaz oxydant au courant de mélange de gaz, sachant que des moyens (7) sont prévus pour le dosage du gaz oxydant introduit dans chaque cas en fonction des paramètres de fonctionnement, sachant qu'en outre, dans l'étage d'oxydation de CO (3), au moins un corps (10) contenant un catalyseur, pouvant être traversé par le courant, est disposé dans le courant de mélange de gaz, lequel corps remplit dans l'étage d'oxydation de CO (3) une section du courant de mélange de gaz pouvant être traversée par le courant, limitée par des parois (9), et sachant que des moyens (12, 13) pour la détermination de la température du corps (10) en fonction de la charge sont prévus,
**caractérisé en ce que** le corps (10) pouvant être traversé par le courant est découplé thermiquement des parois (9) de l'étage d'oxydation de CO (3).

2. Dispositif selon la revendication 1,
**caractérisé en ce que** le corps (10) pouvant être traversé par le courant a une faible masse thermique.

3. Dispositif selon la revendication 1,
**caractérisé en ce que** le corps (10) pouvant être traversé par le courant comporte un non-tissé revêtu de catalyseur.

4. Dispositif selon la revendication 1,
**caractérisé en ce que** le corps (10) pouvant être traversé par le courant comporte un filet revêtu de catalyseur.

5. Dispositif selon la revendication 1,
**caractérisé en ce que** le corps (10) pouvant être traversé par le courant comporte un empilement en vrac de catalyseur.

6. Dispositif selon la revendication 1,
**caractérisé en ce qu'**un capteur de température (12) est disposé dans le courant de mélange de gaz en aval du corps (10) pouvant être traversé par le courant.

7. Utilisation du dispositif selon la revendication 1 dans un système de pile à combustible.
